# EUROPEAN PATENT APPLICATION

(11) **EP 3 904 817 A1**
(43) Date of publication of application: **03.11.2021**
(21) Application number: 21169335.3
(22) Date of filing: 20.04.2021
(51) Int. Cl.: F28F 3/14, H01M 10/6555

(54) **TEMPERATURE CONTROL ASSEMBLY AND BATTERY PACK USING THE SAME**

(30) Priority: 29.04.2020 CN 202010359257
(71) Applicant: BYD Company Limited, Guangdong 518118 (CN)
(72) Inventor: Tan, Liangwen, Shenzhen, Guangdong (CN); Tan, Jing, Shenzhen, Guangdong (CN); Chen, Wenhui, Shenzhen, Guangdong (CN)
(74) Representative: Hoffmann Eitle

(57) **Abstract**

This application discloses a temperature control assembly and a battery pack. The temperature control assembly includes a first heat-conducting plate, a second heat-conducting plate, and a heating member. The first heat-conducting plate provided with a fitting surface. The second heat-conducting plate includes a flat part, and first bump portions and second bump portions that are connected the flat part and are arranged alternately. The flat part fits to the fitting surface. The first bump portions bump towards a side away from the fitting surface to form a flow channel between the first bump portions and the fitting surface, the flow channel being configured to flow a cooling medium through. The second bump portions bump towards a side away from the fitting surface to form a receiving cavity between the second bump portions and the fitting surface; and a heating member received in the receiving cavity. The temperature control assembly provided in this application integrates the heat dissipation and heating functions, to reduce the size of the battery pack.

## Description

### FIELD

This application relates to the technical field of batteries, and in particular to a temperature control assembly and a battery pack using the temperature control assembly.

### BACKGROUND

As a core power component in electric vehicles, power batteries are critical for the control performance, safety, and service life of electric vehicles. The performance of power batteries is largely affected by the temperature. For example, when the power battery continuously stands in a high-temperature environment, the life and energy efficiency of the power battery will be deteriorated, and even safety accidents may be caused; and when the power battery stands in a low-temperature environment, the active substance in the power battery is caused to be inactivated and cannot be used normally. In related arts, a heat dissipation system and a heating system are provided in the battery pack to control the operating temperature of the power battery within a reasonable range, but the heat dissipation system and the heating system in the battery pack are two independent systems, occupying larger space in the battery pack, and making the battery pack larger in size.

### SUMMARY

The temperature control assembly provided in this application integrates the heat dissipation and heating functions, to reduce the size of the battery pack. This application also provides a battery pack including the temperature control assembly.

In a first aspect, this application provides a temperature control assembly. The temperature control assembly includes: a first heat-conducting plate, a second heat-conducting plate, and a heating member.

The first heat-conducting plate is provided with a fitting surface.

The second heat-conducting plate includes a flat part, and first bump portions and second bump portions that are connected to the flat part and are arranged alternately. The flat part fits to the fitting surface. The first bump portions bump towards a side away from the fitting surface, to form a flow channel between the first bump portions and the fitting surface, the flow channel being configured to flow a cooling medium through. The second bump portions bump towards a side away from the fitting surface, to form a receiving cavity between the second bump portions and the fitting surface.

The heating member is received in the receiving cavity.

In an embodiment, the heating member includes a first surface and a second surface arranged opposite to each other, where the first surface fits to the first heat-conducting plate, and the second surface is arranged to face and be spaced apart from the second heat-conducting plate.

In an embodiment, the temperature control assembly can further include a heat preservation layer received in the receiving cavity, where the heat preservation layer is located between the heating member and the second heat-conducting plate; and one surface of the heat preservation layer abuts against the heating member, and the other surface abuts against the second heat-conducting plate.

In an embodiment, the temperature control assembly can further include an adhesive layer, where one surface of the adhesive layer fits to the first heat-conducting plate and the other surface fits to the heating member.

In an embodiment, the heating member includes a resistor layer and an insulating layer enclosing the resistor layer, where the resistor layer, the insulating layer and the first heat-conducting plate extend in the same direction.

In an embodiment, a plurality of heating members are provided, and the plurality of heating members are disposed at an interval along a first direction. The temperature control assembly can further include a connector located at an end portion of the heating members, and electrically connected to the plurality of heating members.

In an embodiment, the flow channel includes a plurality of main flow channels disposed along the first direction and a plurality of side flow channels, where the side flow channels are provided on two opposite sides of each of the main flow channels, each side flow channel brings two adjacent main flow channels into communication, and at least one main flow channel is provided between any two adjacent heating members.

In an embodiment, each of the main flow channels includes a first main flow channel and a second main flow channel arranged to be spaced apart, where a flow direction of the cooling medium in the first main flow channel is opposite to a flow direction of the cooling medium in the second main flow channel, an inlet of the cooling medium to the first main flow channel is diffferent from an inlet of the cooling medium to the second main flow channel, and an outlet of the cooling medium from the first main flow channel is diffferent from an outlet of the cooling medium from the second main flow channel.

In an embodiment, the inlet of the cooling medium to the first main flow channel and the inlet of the cooling medium to the second main flow channel are located at the same side of the heating member, and arranged opposite to the connector.

In a second aspect, this application further provides a battery pack. The battery pack includes a battery and a temperature control assembly as described above, where the temperature control assembly is mounted to the battery.

In the embodiments of this application, the second heat-conducting plate is provided with the first bump portions and the second bump portions arranged alternately. The first bump portions form, with the first heat-conducting plate, the flow channel accommodating the cooling medium, and the second bump portions form, with the first heat-conducting plate, the receiving cavity accommodating the heating member. As such, the temperature control assembly integrates the heat dissipation and heating functions. Moreover, the formed flow channel and the receiving cavity share the heat-conducting plates, thereby reducing the size of the temperature control assembly integrating the heat dissipation and heating functions, and reducing the space occupied by the temperature control assembly.

### BRIEF DESCRIPTION OF THE DRAWINGS

To describe the technical solutions in this application more clearly, the following briefly introduces the accompanying drawings required for describing the implementations. Apparently, the accompanying drawings in the following description show merely some implementations of this application, and a person of ordinary skill in the art may still derive other drawings from these accompanying drawings without creative efforts.
FIG. 1 is a schematic structural diagram of a battery pack according to an embodiment of this application;
FIG. 2 is a schematic structural diagram of a temperature control assembly shown in FIG. 1;
FIG. 3 is a schematic exploded view showing the structure of the temperature control assembly shown in FIG. 2;
FIG. 4 is a schematic cross-sectional view of the temperature control assembly shown in FIG. 2;
FIG. 5 is a schematic enlarged view showing the structure of a part A shown in FIG. 4;
FIG. 6 is a schematic cross-sectional view of a heating member shown in FIG. 3;
FIG. 7 is a schematic partial structural diagram of the temperature control assembly shown in FIG. 2;
FIG. 8 is a schematic structural diagram of the temperature control assembly shown in FIG. 2 viewed from another angle;
FIG. 9 is a schematic structural diagram of the temperature control assembly shown in FIG. 2 viewed from still another angle;
FIG. 10 is a schematic structural diagram of an inlet and an outlet of a cooling medium to or from the temperature control assembly shown in FIG. 2; and
FIG. 11 is a schematic partial structural diagram of the structure shown in FIG. 9.

### DETAILED DESCRIPTION

The following clearly describes the technical solutions in the implementations of this application with reference to the accompanying drawings in the implementations of this application. Apparently, the described implementations are merely some but not all of the implementations of this application. The implementations in this application and features in the implementations may be combined with each other in the case of no conflict. All other implementations obtained by a person of ordinary skill in the art based on the implementations of this application without creative efforts shall fall within the protection scope of this application.

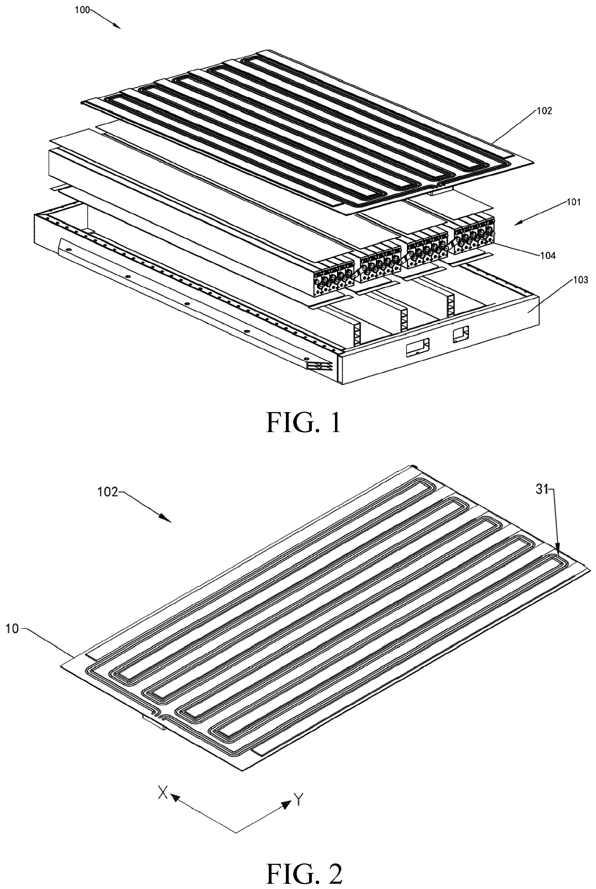

FIG. 1 is a schematic structural diagram of a battery pack according to an embodiment of this application. Referring to FIG. 1, an embodiment of this application provides a battery pack 100. The battery pack 100 is applicable to vehicles, for example, to provide a power source for electric vehicles to drive the electric vehicles to travel. The battery pack 100 is also applicable to other electronic equipment, for example, power generating equipment, unmanned underwater vehicles or power supplies for RVs. In an embodiment of this application, the description is made with an example in which the battery pack 100 is applied to an electric vehicle.

The battery pack 100 includes a battery 101 and a temperature control assembly 102. The temperature control assembly 102 is mounted to the battery 101. The heat generated by the battery 101 is transferred to the temperature control assembly 102, and the temperature control assembly 102 dissipates the heat, so as to avoid the influence of the performance of the battery pack 100 from a too-high local temperature of the battery 101. The temperature control assembly 102 can also expel the heat generated by the battery 101 to the outside of the battery pack 100 to avoid the influence of the working performance of the battery pack 100 from a too-high internal temperature of the battery pack 100.

In an embodiment, the temperature control assembly 102 serves as part of a casing of the battery pack 100 to protect the battery 101 inside. The temperature control assembly 102 may also be used as a bottom plate, a cover plate or a side plate of the battery pack 100, which is not limited in this application.

In this embodiment, the temperature control assembly 102 serves as part of the casing of the battery pack 100, so that the temperature control assembly 102 is in contact with a plurality of batteries 101 inside the battery pack 100, to allow the temperature control assembly 102 to uniformly exchange heat with each battery 101.

The temperature control assembly 102 is mounted to a surface of the battery 101 with the largest surface area. It can be understood that the heat exchange performance between the temperature control assembly 102 and the battery 101 gets better, as the contact area between the temperature control assembly 102 and the battery 101 increases.

As shown in FIG. 1, the battery 101 includes a top surface and a bottom surface arranged opposite to each other, and four side surfaces located between the top surface and the bottom surface. The area of the side surface is larger than the top surface or the bottom surface. A pole 104 of the battery 101 is extended from the top surface of the battery 101, and the temperature control assembly 102 is mounted to a side surface of the battery 101 that has a larger surface area.

A plurality of batteries 101 are provided and the plurality of batteries 101 are mounted on a tray 103. The temperature control assembly 102 and the tray 103 are respectively located on two opposite sides of the battery pack 100. It can be understood that the temperature control assembly 102 and the tray 103 respectively contact two opposite sides of the battery 101 that have a larger area.

In an embodiment of this application, the temperature control assembly 102 is located on a side surface of the battery 101 that has a larger area, to increase the contact area between the temperature control assembly 102 and the battery 101, thereby contributing to the improvement of the heat exchange performance of the temperature control assembly 102 with the battery 101. The temperature control assembly 102 and the tray 103 are respectively located on two opposite sides of the battery pack 100, so that the temperature control assembly 102 can act as an upper cover plate for protecting the battery pack 100, whereby the temperature control assembly 102 and the upper cover plate of the battery pack 100 are the same element to reduce the weight of the battery pack 100.

In an embodiment of this application, the description is made with an example in which the temperature control assembly 102 is used as an upper cover plate of the battery pack 100. In other embodiments of this application, the temperature control assembly 102 may also act as other structural members of the battery pack 100, which is not limited in this application.

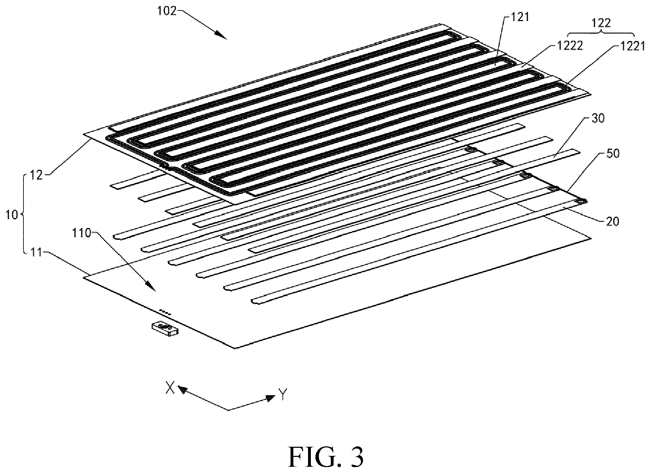

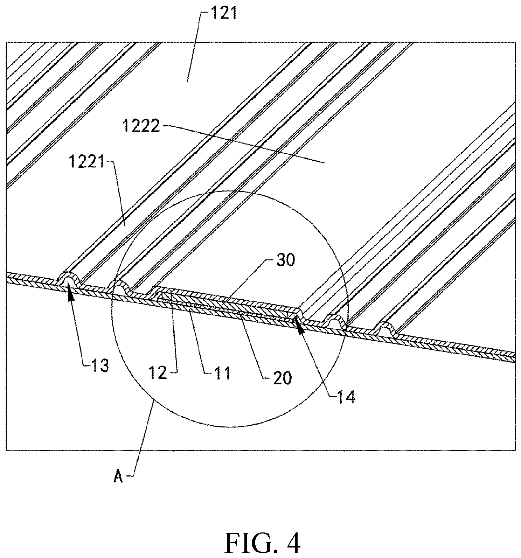

FIG. 2 is a schematic structural diagram of the temperature control assembly 102 shown in FIG. 1; FIG. 3 is a schematic exploded view showing the structure of the temperature control assembly 102 shown in FIG. 2; and FIG. 4 is schematic cross-sectional view of the temperature control assembly 102 shown in FIG. 2. Referring to FIG. 2 to FIG. 4, the temperature control assembly 102 includes a heat-conducting plate 10. The heat-conducting plate 10 fits to the battery 101 and is configured to dissipate the heat generated by the battery 101 by the heat-conducting plate 10, so as to avoid the influence of the working performance of the battery pack 100 from a too-high local temperature of the battery 101. The heat-conducting plate 10 is formed of a material with good heat conductivity, for example, an aluminum alloy with good heat conductivity, to allow the heat-conducting plate 10 to give a uniform temperature.

The heat-conducting plate 10 includes a first heat-conducting plate 11 and a second heat-conducting plate 12. The first heat-conducting plate 11 is provided with a fitting surface 110. The fitting surface 110 fits to the second heat-conducting plate 12. It can be understood that a surface of the first heat-conducting plate 11 facing the second heat-conducting plate 12 is the fitting surface 110. In an embodiment, the first heat-conducting plate 11 is in the shape of a flat plate, so that one surface of the first heat-conducting plate 11 closely fits to the battery 101, and the other surface effectively fits to the second heat-conducting plate 12, thus facilitating the heat exchange between the battery 101 and the heat-conducting plate 10, to improve the heat dissipation effect of the temperature control assembly 102.

The second heat-conducting plate 12 includes a flat part 121 and bump portions 122 connected to the flat part 121. The flat part 121 fits to the fitting surface 110. The fitting surface 110 fits to the flat part 121, such that the first heat-conducting plate 11 is brought into contact with the second heat-conducting plate 12. The bump portions 122 bump from the fitting surface 110 towards a side away from the first heat-conducting plate 11. It can be understood that a gap is formed between each bump portion 122 and the first heat-conducting plate 11. The flat part 121 fits to the first heat-conducting plate 11, and the bump portions 122 each are arranged to be spaced apart from the first heat-conducting plate 11.

The bumps 122 include first bump portions 1221. The first bump portions 1221 bump towards a side away from the fitting surface 110, to form a flow channel 13 between the first bump portions 1221 and the fitting surface 110. It can be understood that the first bump portions 1221 and the first heat-conducting plate 11 define a flow channel 13. The first bump portions 1221 and the first heat-conducting plate 11 corresponding to the first bump portions 1221 are the side walls of the flow channel 13. The flow channel 13 is configured to allow a cooling medium to flow through.

It is understandable that the cooling medium flows in the flow channel 13 formed by the first heat-conducting plate 11 and the second heat-conducting plate 12, to take away part of the heat from the first heat-conducting plate 11 and the second heat-conducting plate 12. Since the heat generated by the battery 101 is transferred to the heat-conducting plate 10, the flowing cooling medium takes away part of the heat generated by the battery 101 to improve the heat dissipation performance of the temperature control assembly 102. The cooling medium may be a gas medium or a liquid medium. That is, the heat dissipation by the temperature control assembly 102 may be liquid cooling, gas cooling, or direct cooling.

In an embodiment, the cooling medium is in a gaseous state at normal temperature. The cooling medium may be, but is not limited to, a refrigerant with a high heat transfer coefficient, such as R134a, R410a, R407C or R22. It can be understood that in this embodiment, the heat dissipation by the temperature control assembly 102 is a direct cooling system.

In this embodiment, the temperature control assembly 102 dissipates the heat from the battery 101 by means of a cooling medium with a high heat transfer coefficient. This not only improves the heat dissipation effect of the temperature control assembly 102, but also avoids the accident of short circuit of the battery pack 100 caused by leakage of the cooling medium, since the cooling medium is gaseous in a normal-temperature environment.

When a direct cooling means is adopted in the temperature control assembly 102, a continuity can be established between the temperature control assembly 102 and an air conditioning system in an electric vehicle, to apply an evaporator of the air conditioning system to the temperature control assembly 102. This not only improves the integration level of the electric vehicle, but also allows the cooling medium (refrigerant) to evaporate in the evaporator and quickly and efficiently take away the heat of the battery 101, thereby effectively improving the heat dissipation effect of the temperature control assembly 102.

Referring to FIG. 3 and FIG. 4, in an embodiment, the temperature control assembly 102 can further include a heating member 20. The heating member 20 is located between the first heat-conducting plate 11 and the bump portions 122. The heating member 20 is used to heat the battery 101 to keep the battery 101 at a suitable temperature when the temperature of the battery 101 is lower than a preset temperature, so as to avoid the influence of the working performance of the battery 101 due to a too low temperature of the battery 101.

The bump portions 122 can also include second bump portions 1222. The second bump portions 1222 and the first bump portions 1221 are arranged alternately. The second bump portions 1222 bump towards a side away from the fitting surface 110, to form a receiving cavity 14 between each second bump portion 1222 and the fitting surface. The heating member 20 is received in the receiving cavity 14. The first bump portion 1221 and the second bump portion 1222 are integrally formed, which simplifies the preparation process of the second heat-conducting plate 12.

It can be understood that the heating member 20 is located in the receiving cavity 14 defined by the second bump portion 1222 and the first heat-conducting plate 11. The receiving cavity 14 and the flow channel 13 share the first heat-conducting plate 11 and the second heat-conducting plate 12, so that the temperature control assembly 102 integrates the heat dissipation and heating functions.

In the embodiments of this application, the heat-conducting plate 10 is provided with the first bump portions 1221 and the second bump portions 1222 arranged alternately. The first bump portions 1221 form, with the first heat-conducting plate 11, the flow channel 13 accommodating the cooling medium, and the second bump portions 1222 form, with the first heat-conducting plate 11, the receiving cavity 14 accommodating the heating member 20. As such, the temperature control assembly 102 integrates the heat dissipation and heating functions. Moreover, the formed flow channel 13 and the receiving cavity 14 share the heat-conducting plate 10, thereby reducing the size of the temperature control assembly 102 integrating the heat dissipation and heating functions, and reducing the space occupied by the temperature control assembly 102. It can be understood that the heating members 20 and the flow channels 13 are arranged alternately, so that the heat dissipation and heating by the temperature control assembly 102 can work independently.

It can be understood that the heat dissipation and heating functions of the temperature control assembly 102 are performed alternately. For example, when an electric car to which this battery pack 100 is applied is in a cold environment, the heating member 20 heats the battery 101 to keep the battery 101 at a suitable temperature if the temperature of the battery pack 100 is less than or equal to a first preset temperature when the battery pack 100 is charged, thereby enhancing the charging efficiency of the battery pack 100. During the traveling of the electric car to which this battery pack 100 is applied, that is, when the battery pack 100 is in an operation state, the battery 101 generates heat during operation, causing the temperature of the battery 101 to rise continuously. When the temperature of the battery 101 is greater than or equal to a second preset temperature, the cooling medium flows between the first heat-conducting plate 11 and the second heat-conducting plate 12 by flowing in the flow channel 13, and takes away part of the heat to reduce the temperature of the battery 101 to ensure that the battery 101 is in a suitable temperature environment, thereby ensuring the service life of the battery pack 100.

The first preset temperature and the second preset temperature can be set as desired, for example, the first preset temperature is less than or equal to 0 Celsius degrees, and the second preset temperature is greater than or equal to 40 Celsius degrees. When the heating member 20 heats the battery 101 to a certain temperature, for example, 15 Celsius degrees, the heating member 20 stops heating, so as to avoid a too high temperature of the battery 101 due to heat generation by the high-temperature battery 101 during the following normal operation.

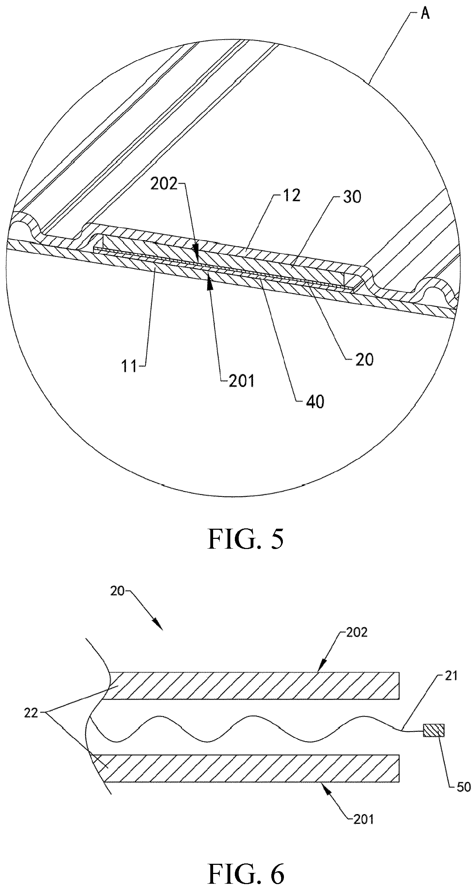

Referring to FIG. 4 and FIG. 5, the heating member 20 includes a first surface 201 and a second surface 202 that are arranged opposite to each other. The first surface 201 fits to the first heat-conducting plate 11. The second surface 202 is arranged to face the second heat-conducting plate 12 and be spaced apart from the second heat-conducting plate 12.

In this embodiment of this application, on the one hand, the first surface 201 of the heating member 20 fits to the first heat-conducting plate 11 such that the heating member 20 is brought into contact with the first heat-conducting plate 11, to allow the heat generated by the heating member 20 to be quickly transferred to the first heat-conducting plate 11 and then effectively to the battery 101, whereby the heating performance of the temperature control assembly 102 is improved.

On the other hand, the second surface 202 of the heating member 20 is arranged to be spaced apart from the second heat-conducting plate 12, so that the heating member 20 and the second heat-conducting plate 12 are spaced apart to prevent the heat generated by the heating member 20 from being directly transferred to the second heat-conducting plate 12 at a side away from the battery 101 causing loss the heat generated by the heating member 20, whereby the utilization rate of the heat generated by the heating member 20 is enhanced. It is understandable that since the second heat-conducting plate 12 is located at a side away from the battery 101 and the heat on the second heat-conducting plate 12 is difficult to transfer to the battery 101, the spacing between the heating member 20 and the second heat-conducting plate 12 is beneficial to the improvement of the heating effect on the battery 101 by the heating member 20.

As shown in FIG. 5, the temperature control assembly 102 can also include a heat preservation layer 30. The heat preservation layer 30 is received in the receiving cavity 14. The heat preservation layer 30 is located between the heating member 20 and the second heat-conducting plate 12. It can be understood that the heat preservation layer 30 separates the heating member 20 from the second heat-conducting plate 12.

In an embodiment of this application, the heat preservation layer 30 is formed of a material with a small thermal conductivity, that is, the thermal resistance between the heating member 20 and the second heat-conducting plate 12 is large, making it difficult for the heat generated by the heating member 20 to be transferred to the second heat-conducting plate 12, whereby the utilization rate of the heat generated by the heating member 20 is enhanced. The heat preservation layer 30 may be, but is not limited to, thermal insulation sponge, for example, aerogel or rubber plastic sponge. In other embodiments, the heat preservation layer 30 can also be filled with a gas, such as air or rare gas. That is, in other embodiments, a gap is formed between the heating member 20 and the second heat-conducting plate 12, and the gap is the heat preservation layer 30. In an embodiment of this application, the description is made with an example in which the heat preservation layer 30 has a solid structure.

Further, one surface of the heat preservation layer 30 abuts against the heating member 20 and the other surface abuts against the second heat-conducting plate 12. It can be understood that in this embodiment, a solid thermal insulation structure is filled between the heating member 20 and the second heat-conducting plate 12 in such a way that one surface of the heat preservation layer 30 abuts against the second heat-conducting plate 12 and the other surface abuts against the heating member 20.

In this embodiment, one surface of the heat preservation layer 30 abuts against the heating member 20, and the other surface abuts against the second heat-conducting plate 12, such that the heat preservation layer 30 is pressed against the heating member 20 to ensure that the heating member 20 tightly fits to the first heat-conducting plate 11. This makes it possible to avoid the partial detachment of the heating member 20 from the first heat-conducting plate 11 to cause the problem that the detached area is locally heated and fused due to a too high temperature, thereby improving the quality of the temperature control assembly 102.

Further, referring to FIG. 5, the temperature control assembly 102 can also include an adhesive layer 40. One surface of the adhesive layer 40 fits to the first heat-conducting plate 11, and the other surface fits to the heating member 20. That is, the adhesive layer 40 is located between the first heat-conducting plate 11 and the heating member 20. It can be understood that the heating member 20 is fixed to the first heat-conducting plate 11 by the adhesive layer 40. The adhesive layer 40 may be, but is not limited to, back glue.

In this embodiment of this application, the heating member 20 is fixed to the first heat-conducting plate 11 by the adhesive layer 40. This makes it possible to avoid the partial detachment of the heating member 20 from the first heat-conducting plate 11 to cause the problem that the detached area is locally heated and fused due to a too high temperature, thereby further improving the quality of the temperature control assembly 102.

FIG. 6 is a schematic cross-sectional view of the heating member 20 shown in FIG. 3. Referring to FIG. 6, in an embodiment, the heating member 20 includes a resistor layer 21 and an insulating layer 22 enclosing the resistor layer 21. The resistor layer 21, the insulating layer 22, and the first heat-conducting plate 11 extend in the same direction.

It can be understood that in this embodiment of this application, the heating member 20 generates heat by passing current through the resistor layer 21. The insulating layer 22 is arranged to enclose the resistor layer 21 and wrap the resistor layer 21 to prevent the resistor layer 21 from being exposed to the outside and presenting safety hazards.

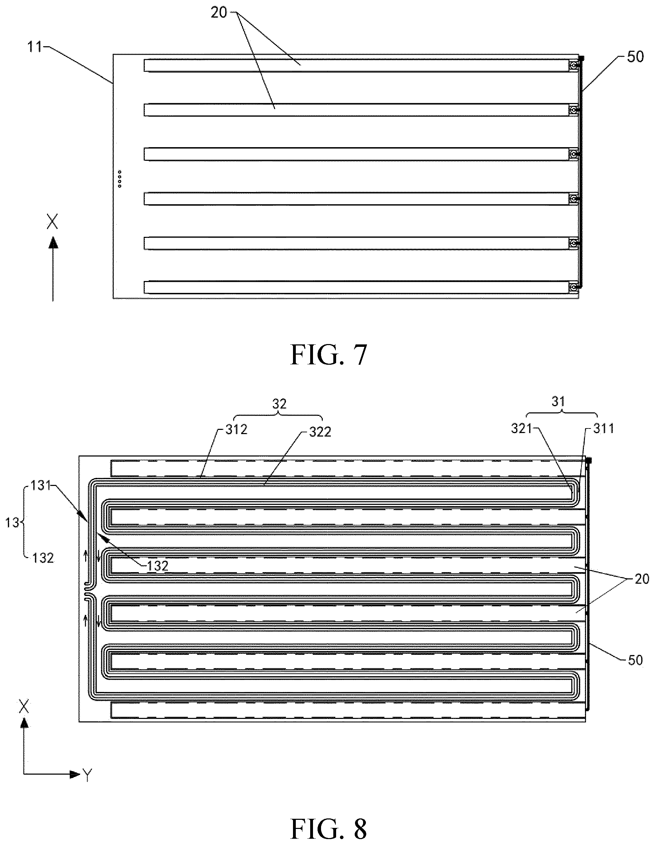

FIG. 7 is a schematic partial structural diagram of the temperature control assembly 102 shown in FIG. 2. Further, referring to FIG. 3 and FIG. 7, a plurality of heating members 20 are provided. The plurality of heating members 20 are disposed at an interval along a first direction. As shown in FIG. 3 or FIG. 7, the first direction is indicated by the X direction. It can be understood that a plurality of heating members 20 are provided, a plurality of second bump portions 1222 are also provided, and one second bump portion 1222 corresponds to one heating member 20. The temperature control assembly 102 can also include a connector 50. The connector 50 is located at an end portion of the heating members 20, and is electrically connected to the plurality of heating members 20.

In this embodiment of this application, the temperature control assembly 102 includes a plurality of heating members 20 arranged at an interval, and the plurality of heating members 20 arranged at an interval are evenly distributed on the heat-conducting plate 10 at an interval, to prevent the waste of raw material caused by the over spread of the heating member 20 on the heat-conducting plate 10. The heat generated by the plurality of heating members 20 arranged at an interval can be effectively transferred to the first heat-conducting plate 11 peripheral to the heating members 20 to allow the first heat-conducting plate 11 to have a uniform heat distribution, so that the battery 101 is evenly heated.

FIG. 8 is a schematic structural diagram of the temperature control assembly 102 shown in FIG. 2 viewed from another angle. In an embodiment, the flow channel 13 includes a plurality of side flow channels 31 and a plurality of main flow channels 32 disposed along the first direction. The side flow channels 31 are provided on two opposite sides of each of the main flow channels 32. The side flow channel 31 brings any two adjacent main flow channels 32 into communication. The main flow channel 32 extends along a second direction. The second direction intersects with the first direction. The second direction and the first direction may be, without limitation, perpendicular. As shown in FIG. 2 or FIG. 8, the first direction is indicated by the X direction, and the second direction is indicated by the Y direction. In an embodiment of this application, the extension direction of the main flow channel 32 is the same as the extension direction of the heat-conducting plate 10. In other embodiments, the extension direction of the main flow channel 32 may also be different from the extension direction of the heat-conducting plate 10, which is not limited in this application.

It is understandable that one side flow channel 31 and two adjacent main flow channels 32 connected by the side flow channel 31 form a "U"-shaped flow channel. A plurality of main flow channels 32 and a plurality of side flow channels 31 are arranged in a roundabout pattern to form a curved flow channel 13, to increase the extension path of the flow channel 13 in an effective area, thereby improving the utilization of the cooling medium and improving the heat dissipation effect of the temperature control assembly 102.

In an embodiment, at least one main flow channel 32 is provided between any two adjacent heating members 20. As shown in FIG. 8, in an embodiment of this application, the description is made with an example in which two main flow channels 32 are provided between any two adjacent heating members 20. In other embodiments, other number of main flow channels 32 can also be provided between any two adjacent heating members 20, which is not limited in this application.

In this embodiment, at least one main flow channel 32 is provided between any two adjacent heating members 20, so that the main flow channels 32 are interposed between a plurality of heating members 20 arranged at an interval. This not only makes full use of the area of the first heat-conducting plate 11 and the second heat-conducting plate 12, but also allows the main flow channels 32 and the heating members 20 to be evenly distributed on the heat-conducting plate 10, so that the temperature control assembly exchanges heat with the battery 101 as a whole uniformly, thereby ensuring the uniformity in temperature of the battery 101 as a whole.

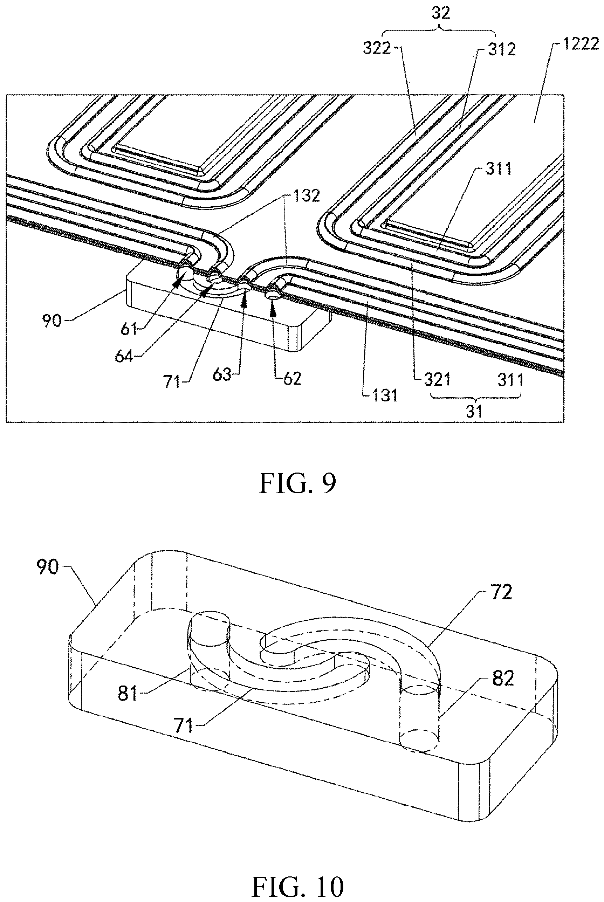

FIG. 9 is a schematic structural diagram of the temperature control assembly 102 shown in FIG. 2 viewed from still another angle. FIG. 10 is a schematic structural diagram of an inlet and an outlet of the cooling medium to or from the temperature control assembly 102 shown in FIG. 2. Referring to FIG. 8 to FIG. 10, in an embodiment, the temperature control assembly 120 can further include an inlet pipe 81 and an outlet pipe 82. The cooling medium enters one end of the flow channel 13 from the inlet pipe 81 and flows in the flow channel 13, and is discharged from the other end of the flow channel 13 to the outlet pipe 82. The flow channel 13 includes a first flow channel 131 and a second flow channel 132. Two ends of the first flow channel 131 are respectively provided with a first cooling medium inlet 61 and a first cooling medium outlet 62. Two ends of the second flow channel 132 are respectively provided with a second cooling medium inlet 63 and a second cooling medium outlet 64.

The first cooling medium inlet 61 and the second cooling medium inlet 63 are both connected to the inlet pipe 81, the first cooling medium outlet 62 and the second cooling medium outlet 64 are both connected to the outlet pipe 82, and a direction from the first cooling medium inlet 61 to the first cooling medium outlet is opposite to a direction from the second cooling medium inlet 63 to the first cooling medium outlet. The direction from the first cooling medium inlet 61 to the first cooling medium outlet 62 is a flow direction of the cooling medium in the first flow channel 131. The direction from the second cooling medium inlet 63 to the second cooling medium outlet 64 is a flow direction of the cooling medium in the second flow channel 132. The first cooling medium inlet 61 is diffferent from the second cooling medium inlet 63.

As shown in FIG. 9, the second cooling medium inlet 63 is diffferent from the first cooling medium inlet 61. Apart of the cooling medium flows into the first flow channel 131 from the first cooling medium inlet 61, and finally flows out from the first cooling medium outlet 62. Another part of the cooling medium flows into the second flow channel 132 from the second cooling medium inlet 63, and finally flows out from the second cooling medium outlet 64.

In this embodiment of this application, the flowing directions of the cooling medium in the first flow channel 131 and the second flow channel 132 arranged in parallel are opposite, that is, the flow channel 13 formed in the heat-conducting plate 10 is a two-way combined flow channel. In this manner, the cooling medium flowing towards the first cooling medium outlet 62 is parallel to the cooling medium flowing in from the second cooling medium inlet 63, so as to avoid that the temperature of the cooling medium near the outlet end is higher than the temperature of the cooling medium near the inlet end, and avoid the poor heat dissipation effect in partial area of the battery 101, thus enabling the temperature control assembly 102 to dissipate heat evenly.

The first flow channel 131 and the second flow channel 132 are arranged to be spaced apart and in parallel. It can be understood that the first flow channel 131 and the second flow channel 132 have a similar or the same curved shape, and extend substantially in the same direction, so that the first flow channel 131 and the second flow channel 132 are arranged in parallel. It is understandable that the flow directions of the cooling medium in the first flow channel 131 and the second flow channel 132 arranged in parallel are opposite.

In an embodiment, the temperature control assembly 102 can further include a diverging pipe 71 and a converging pipe 72 arranged to be spaced apart. The diverging pipe 71 communicates with the first cooling medium inlet 61 and the second cooling medium inlet 63. The converging pipe 72 communicates with the first cooling medium outlet 62 and the second cooling medium outlet 64.

In an embodiment, the diverging pipe 71 is connected to the inlet pipe 81, so that the cooling medium is distributed to the first cooling medium inlet 61 and the second cooling medium inlet 63 by the diverging pipe 71, respectively. The converging pipe 72 is connected to the outlet pipe 82, so that the cooling medium is discharged from the first cooling medium outlet 62 and the second cooling medium outlet 64 and finally discharged out of the outlet pipe 64 through the converging pipe 72. The inlet pipe 81 is located at a side of the diverging pipe 71 away from the first cooling medium inlet 61. The outlet pipe 82 is located at a side of the converging pipe 72 away from the first cooling medium outlet 62.

It can be understood that the cooling medium flows into the first cooling medium inlet 61 and the second cooling medium inlet 63 from the inlet pipe 81 through the diverging pipe 71, and then enters the first flow channel 131 and the second flow channel 132 respectively. The cooling medium flowing out of the first cooling medium outlet 62 and the cooling medium flowing out of the second cooling medium outlet 64 pass through the converging pipe 72 and finally converge in the outlet pipe 82.

In this embodiment of this application, the first cooling medium inlet 61 and the second cooling medium inlet 63 are brought into communication by the diverging pipe 71, and the first cooling medium outlet 62 and the second cooling medium outlet 64 are converged by the converging pipe 72. In this way, the dual-flow channel structure 13 formed to have the first flow channel 131 and the second flow channel 132 can be provided with only one inlet pipe 81 and one outlet pipe 82. By means of the diverging pipe 71, the first cooling medium inlet 61 and the second cooling medium inlet 63 having different flow directions are formed. The cooling medium flowing out of the first cooling medium outlet 62 and the cooling medium flowing out of the second cooling medium outlet 64 are converged by the converging pipe 72. As such, the temperature control assembly 102 is avoided having two inlet pipes 81 and two outlet pipes 82 caused by the first flow channel 131 and the second flow channel 132 that are both provided an inlet pipe and outlet pipe respectively, thereby simplifying the design of the temperature control assembly 102.

Further, the first cooling medium inlet 61 and the second cooling medium inlet 63 are located at the same side of the heating member 20, and are arranged opposite to the connector 50. The first cooling medium outlet 62 and the first cooling medium inlet 61 are located at the same side of the heating member 20. That is, the first cooling medium inlet 61, the first cooling medium outlet 62, the second cooling medium inlet 63, and the second cooling medium outlet 64 are located at the same side of the heating member 20, and are arranged opposite to the connector 50.

It can be understood that the diverging pipe 71 and the converging pipe 72 are located at the same side of the heat-conducting plate 10. The temperature control assembly 102 can further include a diverging groove 90. The diverging groove 90 and the diverging pipe 71 are located at the same side of the heat-conducting plate 10, and the diverging pipe 71 and the converging pipe 72 are both received in the diverging groove 90.

In this embodiment of this application, the diverging pipe 71 and the converging pipe 72 are located at the same side of the heating member 20, and are arranged opposite to the connector 50. That is, the cooling medium inlets and the cooling medium outlets are arranged opposite to the connector 50 connecting the plurality of heating members 20. In this manner, the resistor layers 21 in the plurality of heating member 20 can all be led out from the same side of the heat-conducting plate 10, to prevent the first flow channel 131 or the second flow channel 132 from hindering the lead out of the resistor layers 21 in the heating members 20, thereby facilitating the simultaneous electrical connection of the connector 50 to the plurality of heating members 20 arranged to be spaced apart.

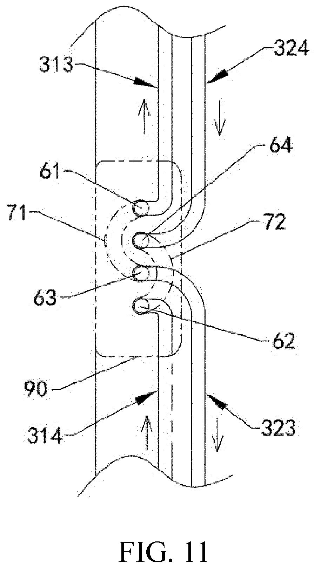

Referring to FIG. 9 to FIG. 11, in an embodiment, the first cooling medium inlet 61, the second cooling medium outlet 64, the first cooling medium outlet 62 and the second cooling medium inlet 63 are arranged in sequence in the first direction. As shown in FIG. 11, the diverging pipe 71 and the converging pipe 72 are two curved and twisted arcs, and the second cooling medium inlet 63 of the diverging pipe 71 is located between the first cooling medium outlet 62 and the second cooling medium outlet 64 of the converging pipe 72.

In this embodiment of this application, the first cooling medium inlet 61, the second cooling medium outlet 64, the first cooling medium outlet 62, and the second cooling medium inlet 63 are arranged in sequence in such a manner that the first cooling medium inlet 61 of the first flow channel 131 is close to the second cooling medium outlet 64 of the second flow channel 132, and the second cooling medium inlet 63 of the second flow channel 132 is close to the first cooling medium outlet 62 of the first flow channel 131, thereby simplifying the disposition of the first flow channel 131 and the second flow channel 132 that are arranged in parallel.

The first flow channel 131 includes first side flow channels 311 and a plurality of first main flow channels 312 disposed at an interval along the first direction. The first side flow channels 311 bring any two adjacent first main flow channels 312 into communication. The second flow channel 132 includes second side flow channels 321 and a plurality of second main flow channels 322 disposed at an interval along the first direction. The second side flow channels 321 bring any two adjacent second main flow channels 322 into communication. The flow direction of the cooling medium in the first main flow channel 312 is opposite to the flow direction of the cooling medium in the second main flow channel 322. It is understandable that the main flow channel 32 includes the first main flow channel 312 and the second main flow channel 322 arranged in parallel. The side flow channels 31 include first side flow channels 311 and second side flow channels 321 arranged in parallel.

It can be understood that one first side flow channel 311 and two adjacent first main flow channels 312 connected to the first side flow channel 311 form a "U"-shaped flow channel. A plurality of first main flow channels 312 and a plurality of first side flow channels 311 are arranged in a roundabout pattern to form the curved first flow channel 131, to increase the extension path of the first flow channel 131 in an effective area, thereby improving the utilization of the cooling medium and improving the heat dissipation effect of the temperature control assembly 102.

At least one main flow channel 32 is provided between any two adjacent heating members 20, indicating that at least one first main flow channel 312 and at least one second main flow channel 322 are provided between any two adjacent heating members 20. In this embodiment, at least one first main flow channel 312 and at least one second main flow channel 322 are provided between any two adjacent heating members 20, so that the first main flow channels 312, the second main flow channels 322 and the heating members 20 are evenly distributed on the heat-conducting plate 10, to enable the temperature control assembly to exchange heat with the battery 101 as a whole uniformly, thereby ensuring the uniformity in temperature of the battery 101 as a whole.

Further, referring to FIG. 8 to FIG. 10, in an embodiment, the first flow channel 131 can also include a first upstream flow channel 313 and a first downstream flow channel 314. The first upstream flow channel 313 is connected to the first cooling medium inlet 61. The first downstream flow channel 314 is connected to the first cooling medium outlet 62. The second flow channel 132 includes a second upstream flow channel 323 and a second downstream flow channel 324. The second upstream flow channel 323 is connected to the second cooling medium inlet 63. The second downstream flow channel 324 is connected to the second cooling medium outlet 64. The first upstream flow channel 313 and the second upstream flow channel 323 are located at two opposite sides of the diverging pipe 71 respectively. The first downstream flow channel 314 and the second downstream flow channel 324 are located at two opposite sides of the converging pipe 72 respectively.

It can be understood that the first upstream flow channel 313 and the first downstream flow channel 314 are respectively located upstream and downstream of the multiple first main flow channels 312. The second upstream flow channel 323 and the second downstream flow channel 324 are respectively located upstream and downstream of the multiple second main flow channels 322. As shown in FIG. 8, in this embodiment of this application, the diverging pipe 71 and the converging pipe 72 are both located in a middle portion of the heat-conducting plate 10, the first upstream flow channel 313 and the second downstream flow channel 324 are located in an upper portion of the heat-conducting plate 10, and the first downstream flow channel 314 and the second upstream flow channel 323 are located in a lower portion of the heat-conducting plate 10.

The implementations of this application are described above in detail. Although the principles and implementations of this application are described by using specific examples in this specification, the descriptions of the foregoing implementations are merely intended to help understand the method and the core idea of the method of this application. Meanwhile, a person of ordinary skill in the art may make modifications to the specific implementations and application range according to the idea of this application. In conclusion, the content of this specification is not construed as a limit on this application.

## Claims

1. A temperature control assembly, comprising:
a first heat-conducting plate, provided with a fitting surface;
a second heat-conducting plate, comprising a flat part, and first bump portions and second bump portions that are connected to the flat part and are arranged alternately, wherein the flat part fits to the fitting surface, the first bump portions bump towards a side away from the fitting surface, to form a flow channel between the first bump portions and the fitting surface, the flow channel being configured to flow a cooling medium through, and the second bump portions bump towards a side away from the fitting surface, to form a receiving cavity between the second bump portions and the fitting surface; and
a heating member, received in the receiving cavity.

2. The temperature control assembly according to claim 1, wherein the heating member comprises a first surface and a second surface arranged opposite to each other, wherein the first surface fits to the first heat-conducting plate, and the second surface is arranged to face and be spaced apart from the second heat-conducting plate.

3. The temperature control assembly according to claim 2, further comprising a heat preservation layer received in the receiving cavity, wherein the heat preservation layer is located between the heating member and the second heat-conducting plate; and one surface of the heat preservation layer abuts against the heating member, and the other surface abuts against the second heat-conducting plate.

4. The temperature control assembly according to claim 3, further comprising an adhesive layer, wherein one surface of the adhesive layer fits to the first heat-conducting plate and the other surface fits to the heating member.

5. The temperature control assembly according to claim 1, wherein the heating member comprises a resistor layer and an insulating layer enclosing the resistor layer, wherein the resistor layer, the insulating layer and the first heat-conducting plate extend in a same direction.

6. The temperature control assembly according to any one of claims 1 to 5, wherein a plurality of heating members are provided, and the plurality of heating members are disposed at an interval along a first direction; the temperature control assembly further comprises a connector located at an end portion of the heating members, and electrically connected to the plurality of heating members.

7. The temperature control assembly according to claim 6, wherein the flow channel comprises a plurality of main flow channels disposed along the first direction and a plurality of side flow channels, wherein the side flow channels are provided on two opposite sides of each of the main flow channels, each side flow channel brings two adjacent main flow channels into communication, and at least one main flow channel is provided between any two adjacent heating members.

8. The temperature control assembly according to claim 7, wherein each of the main flow channels comprises a first main flow channel and a second main flow channel arranged to be spaced apart, wherein a flow direction of the cooling medium in the first main flow channel is opposite to a flow direction of the cooling medium in the second main flow channel, an inlet of the cooling medium to the first main flow channel is diffferent from an inlet of the cooling medium to the second main flow channel, and an outlet of the cooling medium from the first main flow channel is diffferent from an outlet of the cooling medium from the second main flow channel.

9. The temperature control assembly according to claim 8, wherein the inlet of the cooling medium to the first main flow channel and the inlet of the cooling medium to the second main flow channel are located at a same side of the heating member, and arranged opposite to the connector.

10. A battery pack, comprising a battery and a temperature control assembly according to any one of claims 1 to 9, wherein the temperature control assembly is mounted to the battery.
